# EUROPEAN PATENT APPLICATION

(11) **EP 4 474 453 A1**
(43) Date of publication of application: **11.12.2024**
(21) Application number: 23177364.9
(22) Date of filing: 05.06.2023
(51) Int. Cl.: C11D 3/10, C11D 11/04

(54) **A METHOD OF MAKING A LAUNDRY DETERGENT RECYCLE STREAM COMPOSITION**

(71) Applicant: The Procter & Gamble Company, Cincinnati, OH 45202 (US)
(72) Inventor: CARAGAY, Jose Rodel Mabilangan, Newcastle upon Tyne, NE12 9BZ (GB); HENDRY, James Robert, Newcastle upon Tyne, NE1 7RU (GB); LEE, Jonathan George Malcolm, Newcastle upon Tyne, NE1 7RU (GB)
(74) Representative: P&G Patent Belgium UK

(57) **Abstract**

The present invention relates to a method of making a laundry detergent recycle stream composition.

## Description

### FIELD OF THE INVENTION

The present invention relates to a method of making a laundry detergent recycle stream. Using a rotating packed bed, the method captures carbon from CO₂ as well as surfactant fines from a spray-drying laundry detergent tower exhaust stream. The resultant recycle stream can easily recycle captured carbon in the form of sodium carbonate and surfactant back into a laundry detergent.

### BACKGROUND OF THE INVENTION

Spray-drying is a very common method of making laundry detergent powders. Typically, detergent ingredients such as detersive surfactant are mixed in a crutcher and sprayed into a tower and dried using hot air within the tower.

During the process, carbon dioxide gas is released from the spray-drying tower via the exhaust stream, and in addition, surfactant fines are also lost in the exhaust stream.

Attempts have been made to recover surfactant fines from the exhaust stream and recycle them back into detergent products. Very little has been done to remove CO₂ from the exhaust stream.

The present invention provides a process whereby both carbon capture and surfactant fine removal from the exhaust stream can be achieved using a rotating packed bed that is operated in a very specific manner.

### SUMMARY OF THE INVENTION

The present invention provides a method of making a laundry detergent recycle stream composition, wherein the method comprises the steps of:
(a) introducing into a rotating packed bed:
   (i) an exhaust stream from a laundry detergent powder spray-drying tower, wherein the exhaust stream comprises:
      (i)(a) from 400ppm to 40000ppm CO₂; and
      (i)(b) from 20ppm to 3000ppm surfactant particulate fine material comprising from 10wt% to 50wt% detersive surfactant and having a particle size distribution such that the d₅₀ particle size is in the range of from 5µm to 30µm and the d₉₀ particle size is in the range of from 10µm to 80µm; and
   (ii) an aqueous NaOH mixture comprising from at least 30wt% NaOH,

   wherein the ratio of (i) the inlet flow of said aqueous NaOH mixture into said rotating packed bed to (ii) the inlet flow of said exhaust stream into said rotating packed bed is in the range of from 0.2 to 2,
   wherein the temperature of said aqueous NaOH mixture is greater than the dew point of said exhaust stream,
   and wherein:
      (i) at least some of the CO₂ from said exhaust stream is reacted with some of the NaOH from said aqueous NaOH mixture to capture the carbon from the CO₂ to form Na₂CO₃ in solid particulate form and H₂O in fluid form; and
      (ii) at least some of said surfactant particulate fine material is removed from the exhaust stream,
   to form an intermediate captured composition that is removed from the rotating packed bed, wherein the intermediate captured composition is in the form of a slurry and comprises:
      (i) from 1wt% to 20wt% said solid particulate Na₂CO₃;
      (ii) from 0.05wt% to 1.0wt% said surfactant particulate fine material;
      (iii) from 20wt% to 49.95wt% NaOH in fluid form; and
      (iv) from 29wt% to 78.5wt% H₂O in fluid form; and
(b) passing the intermediate captured composition through a filter to remove at least some of the NaOH and at least some of the H₂O from the intermediate captured composition to form a laundry detergent recycle stream composition, wherein the laundry detergent recycle stream composition comprises:
   (i) from 25wt% to 55wt% said solid particulate Na₂CO₃;
   (ii) from 0.5wt% to 10wt% said surfactant particulate fine material;
   (iii) from 5wt% to 34wt% NaOH in fluid form; and
   (iv) from 1wt% to 68.5wt% water.

### DETAILED DESCRIPTION OF THE INVENTION

Method of making a laundry detergent recycle stream composition.

The method comprises the steps of:
(a) introducing into a rotating packed bed:
   (i) an exhaust stream from a laundry detergent powder spray-drying tower, wherein the exhaust stream comprises:
      (i)(a) from 400ppm to 4000ppm CO₂; and
      (i)(b) from 20ppm to 3000ppm surfactant particulate fine material comprising from 10wt% to 50wt% detersive surfactant and having a particle size distribution such that the d₅₀ particle size is in the range of from 5µm to 30µm and the d₉₀ particle size is in the range of from 10µm to 80µm; and
   (ii) an aqueous NaOH mixture comprising from at least 30wt% NaOH,

   wherein the ratio of (i) the inlet flow of said aqueous NaOH mixture into said rotating packed bed to (ii) the inlet flow of said exhaust stream into said rotating packed bed is in the range of from 0.2 to 2,
   wherein the temperature of said aqueous NaOH mixture is greater than the dew point of said exhaust stream,
   and wherein:
      (i) at least some of the CO₂ from said exhaust stream is reacted with some of the NaOH from said aqueous NaOH mixture to capture the carbon from the CO₂ to form Na₂CO₃ in solid particulate form and H₂O in fluid form; and
      (ii) at least some of said surfactant particulate fine material is removed from the exhaust stream,
   to form an intermediate captured composition that is removed from the rotating packed bed, wherein the intermediate captured composition is in the form of a slurry and comprises:
      (i) from 1wt% to 20wt% said solid particulate Na₂CO₃;
      (ii) from 0.05wt% to 1.0wt% said surfactant particulate fine material;
      (iii) from 20wt% to 49.95wt% NaOH in fluid form; and
      (iv) from 29wt% to 78.5wt% H₂O in fluid form; and
(b) passing the intermediate captured composition through a filter to remove at least some of the NaOH and at least some of the H₂O from the intermediate captured composition to form a laundry detergent recycle stream composition, wherein the laundry detergent recycle stream composition comprises:
   (i) from 25wt% to 55wt% said solid particulate Na₂CO₃;
   (ii) from 0.5wt% to 10wt% said surfactant particulate fine material;
   (iii) from 5wt% to 34wt% NaOH in fluid form; and
   (iv) from 1wt% to 68.5wt% water.

Preferably, at least some of the NaOH removed from the intermediate captured composition during step (b) is recycled back into the aqueous NaOH mixture that is introduced into the rotating packed bed during step (a).

Preferably, the Na₂CO₃ formed in the carbon capture transformation of step (a) is in anhydrous form.

### Step (a) carbon capture step.

Step (a) introduces into a rotating packed bed:
(i) an exhaust stream from a laundry detergent powder spray-drying tower, wherein the exhaust stream comprises:
   (i)(a) from 400ppm to 40000ppm CO₂; and
   (i)(b) from 20ppm to 3000ppm surfactant particulate fine material comprising from 10wt% to 50wt% detersive surfactant and having a particle size distribution such that the d₅₀ particle size is in the range of from 5µm to 30µm and the d₉₀ particle size is in the range of from 10µm to 80µm; and
(ii) an aqueous NaOH mixture comprising from at least 30wt% NaOH.

The ratio of (i) the inlet flow of said aqueous NaOH mixture into said rotating packed bed to (ii) the inlet flow of said exhaust stream into said rotating packed bed is in the range of from 0.2:2, preferably from 0.6 to 2, preferably from 0.8 to 1.8.

The temperature of said aqueous NaOH mixture is greater than the dew point of said exhaust stream.

### During step (a):

(i) at least some of the CO₂ from said exhaust stream is reacted with some of the NaOH from said aqueous NaOH mixture to capture the carbon from the CO₂ to form Na₂CO₃ in solid particulate form and H₂O in fluid form; and
(ii) at least some of said surfactant particulate fine material is removed from the exhaust stream,
to form an intermediate captured composition that is removed from the rotating packed bed.

The intermediate captured composition is in the form of a slurry and comprises:
(i) from 1wt% to 20wt% said solid particulate Na₂CO₃;
(ii) from 0.05wt% to 1.0wt% said surfactant particulate fine material;
(iii) from 20wt% to 49.95wt% NaOH in fluid form; and
(iv) from 29wt% to 78.5wt% H₂O in fluid form.

Preferably, during step (a) at least 70%, or at least 80%, or even at least 90% of the carbon from the CO₂ is captured. However, lower yields of at least 20% or at least 30% or even at least 40% carbon capture from CO₂ can also be obtained.

Typically, step (a) is an exothermic reaction and can generate heat. This heat can also be captured, for example by using heat exchanger. The heat exchanger can be integrated into the rotating packed bed design or can be separate equipment.

### Step (b) filtering step.

Step (b) passes the intermediate captured composition through a filter to remove at least some of the NaOH and at least some of the H₂O from the intermediate captured composition to form a laundry detergent recycle stream composition.

### Rotating packed bed.

Any suitable rotating packed bed can be used. The rotating packed bed can rotate around a vertical axis or a horizontal axis.

The gas and liquid inlets of the rotating packed bed can be in counter-current or co-current configuration.

One rotating packed bed can be used, or two or more, or three or more, or four or more, or even five or more rotating packed beds can be used, for example in series. Preferably, the power consumption of several rotating packed beds, for example smaller rotating packed beds, if used during step (a) would be the same or as similar as possible to one single rotating packed bed, for example a larger rotating packed bed, to achieve the same amount of carbon capture and surfactant scrubbing.

Suitable rotating packed beds are supplied by:
Richard Alan Engineering
   Richard Alan House
   Owl Lane
   Dewsbury
   WF12 7RD
Mojonnier
   10325 State Route 43, Suite N
   Streetsboro,
   Ohio 44241
   USA
Andritz AG
   Andritz Group Headquarters
   Stattegger Strasse 18
   8045 Graz
   Austria
ProSpin
   Rokicińska 156
   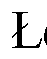 ódź
   92-412
   Poland

Typically, the rotating packed bed has a diameter in the range of from 2.0 to 10m, or from 4.0m to 7.0m. The rotating packed bed is typically disk shaped.

Typically, the pressure drop within the rotating packed bed is in the range of from 50 Pa to 1000 Pa, or from 100 Pa to 500 Pa.

Typically, the rotating packed bed has a drive motor power consumption in the range of from 1.0kW to 6.0kW.

Preferably, the rotating packed bed rotates with a centrifugal acceleration of 70 to 1650 m/s².

Typically, the centrifugal acceleration needed to create a film and spray flow regime, for example centrifugal acceleration of 200m/s² to 800m/s² or 1000m/s² to 1400m/s² may be suitable. Lower centrifugal acceleration may be preferred as they require less energy to operate.

Preferably, the rotating packed bed is operated at a range of from 70% to 90% of the flooding limit, as calculated using the Lockett Correlation. The flooding limit is the point at which the liquid components of the rotating packed bed flow out of the inlet pipe.

The Lockett Correlation is described in more detail in "Lockett M.J., 1995, 'Flooding of Rotating Structured Packing and its Application to Conventional Packed Columns', Transactions Institution of Chemical Engineers, Part A, Vol. 73(5), pgs 379-384".

Preferably, the packing in the rotating packed bed has an available surface area to volume ratio of from 600 to 1500 m²/m³.

Suitable packing material is stainless steel.

Suitable packing materials are supplied by:
Mojonnier
   10325 State Route 43, Suite N
   Streetsboro,
   Ohio 44241
   USA
Julius Montz GmbH
   Hofstrsse 82
   40723 Hilden
   Germany

### Exhaust stream.

The exhaust stream comprises:
(i)(a) from 400ppm to 40000ppm CO₂; and
(i)(b) from 20ppm to 200ppm surfactant particulate fine material comprising from 10wt% to 50wt% detersive surfactant and having a particle size distribution such that the d₅₀ particle size is in the range of from 5µm to 30 and the d₉₀ particle size is in the range of from 10µm to 80µm.

Preferably, the exhaust stream comprises:
(i)(a) from 400ppm to 4000ppm CO₂; and
(i)(b) from 20ppm to 200ppm surfactant particulate fine material,
wherein said exhaust stream has a humidity of from 60 gH₂0/kgair to 600 gH₂0/kgair.

Typically, the humidity of the exhaust stream is below the saturation of air at the exhaust temperature.

Preferably, the exhaust stream has a temperature in the range of from 70°C to 100°C.

Preferably, the exhaust stream is under an absolute pressure of at least 102,750 Pa when it is introduced into the rotating packed bed.

Preferably, the exhaust stream has a dew point in the range of from 50°C to 65°C.

The exhaust stream may comprise from 400ppm to2000 ppm CO₂.

The exhaust stream may comprise inorganic particulate material, for example sodium carbonate and/or sodium sulphate particulate material. This inorganic particulate material may be present at concentrations of from 10ppm to 180ppm.

### Surfactant particulate fine material.

The surfactant particulate fine material comprises from 10wt% to 50wt% detersive surfactant and has a particle size distribution such that the d₅₀ particle size is in the range of from 5µm to 30 and the d₉₀ particle size is in the range of from 10µm to 80µm.

Preferably, the surfactant particulate fine material comprises from 20wt% to 30wt% detersive surfactant and has a particle size distribution such that the d₅₀ particle size is in the range of from 10µm to 20 µm and the d₉₀ particle size is in the range of from 15µm to 35µm.

### Aqueous NaOH mixture.

The aqueous NaOH mixture comprises from at least 30wt% NaOH.

Preferably, the aqueous NaOH mixture comprises at least 40wt% NaOH.

Preferably, the aqueous NaOH mixture has a temperature of from 60°C to 80°C. Intermediate captured composition.

The intermediate captured composition is in the form of a slurry and comprises:
(i) from 1wt% to 20wt% said solid particulate Na₂CO₃;
(ii) from 0.05wt% to 1.0wt% said surfactant particulate fine material;
(iii) from 20wt% to 49.95wt% NaOH in fluid form; and
(iv) from 29wt% to 78.5wt% H₂O in fluid form.

Preferably, the intermediate captured composition comprises:
(i) from 3wt% to 6wt% said solid particulate Na₂CO₃;
(ii) from 0.0030wt% to 0.0600wt% said surfactant particulate fine material;
(iii) from 25wt% to 35wt% NaOH in fluid form; and
(iv) from 50wt% to 70wt% H₂O in fluid form.

Typically, the intermediate captured composition will exit the rotating packed bed at a temperature of around 5°C lower than the liquid and gas inlet temperatures. Typically, the intermediate captured composition will exit the rotating packed bed at a temperature of at least 35°C, or at least 50°C, or even at least 60°C, and preferably from 50°C to 65°C.

It may be preferred for the intermediate captured composition to be cooled, for example if the heat from step (a) is wanting to be captured.

The intermediate captured composition may have a particle size distribution such that d₅₀ particle size is in the range of from 2.0µm to 60µm.

### Laundry detergent recycle stream composition.

The laundry detergent recycle stream composition comprises:
(i) from 25wt% to 55wt% said solid particulate Na₂CO₃;
(ii) from 0.5wt% to 10wt% said surfactant particulate fine material;
(iii) from 5wt% to 34wt% NaOH in fluid form; and
(iv) from 1wt% to 68.5wt% water.

Preferably, the laundry detergent recycle stream composition comprises:
(i) from 45wt% to 84wt% said solid particulate Na₂CO₃;
(ii) from 0.005wt% to 0.04wt% said surfactant particulate fine material;
(iii) from 5wt% to 10wt% NaOH in fluid form; and
(iv) from 10wt% to 25wt% water.

The laundry detergent recycle stream can be recycled back into the spray-drying process, for example the laundry detergent recycle stream can be introduced into the crutcher mixture of the spray-drying process. Alternatively, the laundry detergent recycle stream can be introduced into another laundry detergent process, such as agglomeration and dry-mixing. For dry-mixing, it may be preferred that the laundry detergent recycle stream is dried prior to any subsequent dry-mixing step.

Suitable detergent ingredients that may also be present are selected from: detersive surfactant, such as anionic detersive surfactants, non-ionic detersive surfactants, cationic detersive surfactants, zwitterionic detersive surfactants and amphoteric detersive surfactants; polymers, such as carboxylate polymers, soil release polymer, anti-redeposition polymers, cellulosic polymers and care polymers; bleach, such as sources of hydrogen peroxide, bleach activators, bleach catalysts and pre-formed peracids; photobleach, such as such as zinc and/or aluminium sulphonated phthalocyanine; enzymes, such as proteases, amylases, cellulases, lipases; zeolite builder; phosphate builder; co-builders, such as citric acid and citrate; carbonate, such as sodium carbonate and sodium bicarbonate; sulphate salt, such as sodium sulphate; silicate salt such as sodium silicate; chloride salt, such as sodium chloride; brighteners; chelants; hueing agents; dye transfer inhibitors; dye fixative agents; perfume; silicone; fabric softening agents, such as clay; flocculants, such as polyethyleneoxide; suds supressors; and any combination thereof.

Suitable laundry detergent compositions may have a low buffering capacity. Such laundry detergent compositions typically have a reserve alkalinity to pH 9.5 of less than 5.0gNaOH/100g. These low buffered laundry detergent compositions typically comprise low levels of carbonate salt.

Detersive Surfactant: Suitable detersive surfactants include anionic detersive surfactants, non-ionic detersive surfactant, cationic detersive surfactants, zwitterionic detersive surfactants and amphoteric detersive surfactants. Suitable detersive surfactants may be linear or branched, substituted or un-substituted, and may be derived from petrochemical material or biomaterial.

Anionic detersive surfactant: Suitable anionic detersive surfactants include sulphonate and sulphate detersive surfactants.

Suitable sulphonate detersive surfactants include methyl ester sulphonates, alpha olefin sulphonates, alkyl benzene sulphonates, especially alkyl benzene sulphonates, preferably C₁₀₋₁₃ alkyl benzene sulphonate. Suitable alkyl benzene sulphonate (LAS) is obtainable, preferably obtained, by sulphonating commercially available linear alkyl benzene (LAB); suitable LAB includes low 2-phenyl LAB, other suitable LAB include high 2-phenyl LAB, such as those supplied by Sasol under the tradename Hyblene^{®}.

Suitable sulphate detersive surfactants include alkyl sulphate, preferably C₈₋₁₈ alkyl sulphate, or predominantly C₁₂ alkyl sulphate.

A preferred sulphate detersive surfactant is alkyl alkoxylated sulphate, preferably alkyl ethoxylated sulphate, preferably a C₈₋₁₈ alkyl alkoxylated sulphate, preferably a C₈₋₁₈ alkyl ethoxylated sulphate, preferably the alkyl alkoxylated sulphate has an average degree of alkoxylation of from 0.5 to 20, preferably from 0.5 to 10, preferably the alkyl alkoxylated sulphate is a C₈₋₁₈ alkyl ethoxylated sulphate having an average degree of ethoxylation of from 0.5 to 10, preferably from 0.5 to 5, more preferably from 0.5 to 3 and most preferably from 0.5 to 1.5.

The alkyl sulphate, alkyl alkoxylated sulphate and alkyl benzene sulphonates may be linear or branched, substituted or un-substituted, and may be derived from petrochemical material or biomaterial.

Other suitable anionic detersive surfactants include alkyl ether carboxylates.

Suitable anionic detersive surfactants may be in salt form, suitable counter-ions include sodium, calcium, magnesium, amino alcohols, and any combination thereof. A preferred counterion is sodium.

Non-ionic detersive surfactant: Suitable non-ionic detersive surfactants are selected from the group consisting of: C₈-C₁₈ alkyl ethoxylates, such as, NEODOL^{®} non-ionic surfactants from Shell; C₆-C₁₂ alkyl phenol alkoxylates wherein preferably the alkoxylate units are ethyleneoxy units, propyleneoxy units or a mixture thereof; C₁₂-C₁₈ alcohol and C₆-C₁₂ alkyl phenol condensates with ethylene oxide/propylene oxide block polymers such as Pluronic^{®} from BASF; alkyl polysaccharides, preferably alkylpolyglycosides; methyl ester ethoxylates; polyhydroxy fatty acid amides; ether capped poly(oxyalkylated) alcohol surfactants; and mixtures thereof.

Suitable non-ionic detersive surfactants are alkylpolyglucoside and/or an alkyl alkoxylated alcohol.

Suitable non-ionic detersive surfactants include alkyl alkoxylated alcohols, preferably C₈₋₁₈ alkyl alkoxylated alcohol, preferably a C₈₋₁₈ alkyl ethoxylated alcohol, preferably the alkyl alkoxylated alcohol has an average degree of alkoxylation of from 1 to 50, preferably from 1 to 30, or from 1 to 20, or from 1 to 10, preferably the alkyl alkoxylated alcohol is a C₈₋₁₈ alkyl ethoxylated alcohol having an average degree of ethoxylation of from 1 to 10, preferably from 1 to 7, more preferably from 1 to 5 and most preferably from 3 to 7. The alkyl alkoxylated alcohol can be linear or branched, and substituted or un-substituted.

Suitable nonionic detersive surfactants include secondary alcohol-based detersive surfactants.

Cationic detersive surfactant: Suitable cationic detersive surfactants include alkyl pyridinium compounds, alkyl quaternary ammonium compounds, alkyl quaternary phosphonium compounds, alkyl ternary sulphonium compounds, and mixtures thereof.

Preferred cationic detersive surfactants are quaternary ammonium compounds having the general formula:

(R)(R₁)(R₂)(R₃)N⁺ X⁻

wherein, R is a linear or branched, substituted or unsubstituted C₆₋₁₈ alkyl or alkenyl moiety, R₁ and R₂ are independently selected from methyl or ethyl moieties, R₃ is a hydroxyl, hydroxymethyl or a hydroxyethyl moiety, X is an anion which provides charge neutrality, preferred anions include: halides, preferably chloride; sulphate; and sulphonate.

Zwitterionic detersive surfactant: Suitable zwitterionic detersive surfactants include amine oxides and/or betaines.

Polymer: Suitable polymers include carboxylate polymers, soil release polymers, anti-redeposition polymers, cellulosic polymers, care polymers and any combination thereof.

Carboxylate polymer: The composition may comprise a carboxylate polymer, such as a maleate/acrylate random copolymer or polyacrylate homopolymer. Suitable carboxylate polymers include: polyacrylate homopolymers having a molecular weight of from 4,000 Da to 9,000 Da; maleate/acrylate random copolymers having a molecular weight of from 50,000 Da to 100,000 Da, or from 60,000 Da to 80,000 Da.

Another suitable carboxylate polymer is a co-polymer that comprises: (i) from 50 to less than 98 wt% structural units derived from one or more monomers comprising carboxyl groups; (ii) from 1 to less than 49 wt% structural units derived from one or more monomers comprising sulfonate moieties; and (iii) from 1 to 49 wt% structural units derived from one or more types of monomers selected from ether bond-containing monomers represented by formulas (I) and (II): 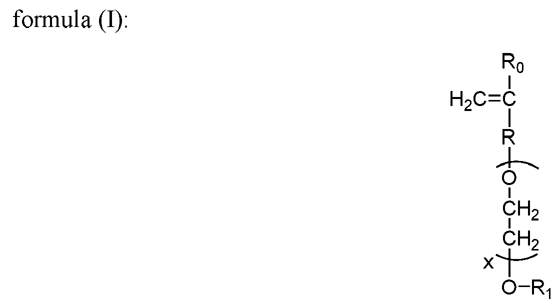
wherein in formula (I), R₀ represents a hydrogen atom or CH₃ group, R represents a CH₂ group, CH₂CH₂ group or single bond, X represents a number 0-5 provided X represents a number 1-5 when R is a single bond, and R₁ is a hydrogen atom or C₁ to C₂₀ organic group; 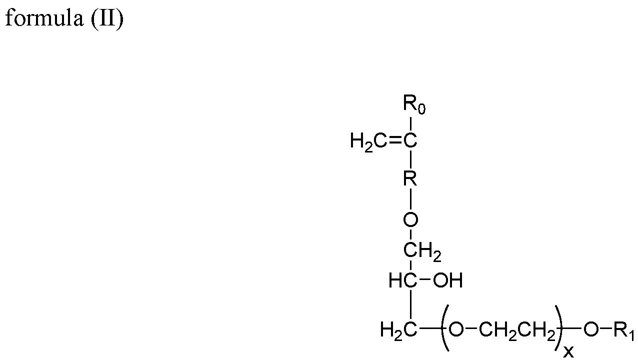
wherein in formula (II), R₀ represents a hydrogen atom or CH₃ group, R represents a CH₂ group, CH₂CH₂ group or single bond, X represents a number 0-5, and R₁ is a hydrogen atom or C₁ to C₂₀ organic group.

It may be preferred that the polymer has a weight average molecular weight of at least 50kDa, or even at least 70kDa.

Soil release polymer: The composition may comprise a soil release polymer. A suitable soil release polymer has a structure as defined by one of the following structures (I), (II) or (III):

(I) -[(OCHR¹-CH^{R2})ₐ-O-OC-Ar-CO-]_{d}

(II) -[(OCHR³-CHR⁴)_{b}-O-OC-sAr-CO-]ₑ

(III) -[(OCHR⁵-CHR⁶)_{c}-OR⁷]_{f}

wherein:
a, b and c are from 1 to 200;
d, e and f are from 1 to 50;
Ar is a 1,4-substituted phenylene;
sAr is 1,3-substituted phenylene substituted in position 5 with SO₃Me;
Me is Li, K, Mg/2, Ca/2, Al/3, ammonium, mono-, di-, tri-, or tetraalkylammonium wherein the alkyl groups are C₁-C₁₈ alkyl or C₂-C₁₀ hydroxyalkyl, or mixtures thereof;
R¹, R², R³, R⁴, R⁵ and R⁶ are independently selected from H or C₁-C₁₈ n- or iso-alkyl; and
R⁷ is a linear or branched C₁-C₁₈ alkyl, or a linear or branched C₂-C₃₀ alkenyl, or a cycloalkyl group with 5 to 9 carbon atoms, or a C₈-C₃₀ aryl group, or a C₆-C₃₀ arylalkyl group.
Suitable soil release polymers are sold by Clariant under the TexCare^{®} series of polymers, e.g. TexCare^{®} SRN240 and TexCare^{®} SRA300. Other suitable soil release polymers are sold by Solvay under the Repel-o-Tex^{®} series of polymers, e.g. Repel-o-Tex^{®} SF2 and Repel-o-Tex^{®} Crystal.

Anti-redeposition polymer: Suitable anti-redeposition polymers include polyethylene glycol polymers and/or polyethyleneimine polymers.

Suitable polyethylene glycol polymers include random graft co-polymers comprising: (i) hydrophilic backbone comprising polyethylene glycol; and (ii) hydrophobic side chain(s) selected from the group consisting of: C₄-C₂₅ alkyl group, polypropylene, polybutylene, vinyl ester of a saturated C₁-C₆ mono-carboxylic acid, C₁-C₆ alkyl ester of acrylic or methacrylic acid, and mixtures thereof. Suitable polyethylene glycol polymers have a polyethylene glycol backbone with random grafted polyvinyl acetate side chains. The average molecular weight of the polyethylene glycol backbone can be in the range of from 2,000 Da to 20,000 Da, or from 4,000 Da to 8,000 Da. The molecular weight ratio of the polyethylene glycol backbone to the polyvinyl acetate side chains can be in the range of from 1: 1 to 1:5, or from 1: 1.2 to 1:2. The average number of graft sites per ethylene oxide unit can be less than 0.02, or less than 0.016, the average number of graft sites per ethylene oxide unit can be in the range of from 0.010 to 0.018, or the average number of graft sites per ethylene oxide unit can be less than 0.010, or in the range of from 0.004 to 0.008.

Suitable polyethylene glycol polymers are described in WO08/007320.

A suitable polyethylene glycol polymer is Sokalan HP22.

Cellulosic polymer: Suitable cellulosic polymers are selected from alkyl cellulose, alkyl alkoxyalkyl cellulose, carboxyalkyl cellulose, alkyl carboxyalkyl cellulose, sulphoalkyl cellulose, more preferably selected from carboxymethyl cellulose, methyl cellulose, methyl hydroxyethyl cellulose, methyl carboxymethyl cellulose, and mixures thereof.

Suitable carboxymethyl celluloses have a degree of carboxymethyl substitution from 0.5 to 0.9 and a molecular weight from 100,000 Da to 300,000 Da.
Suitable carboxymethyl celluloses have a degree of substitution greater than 0.65 and a degree of blockiness greater than 0.45, e.g. as described in WO09/154933.

Care polymers: Suitable care polymers include cellulosic polymers that are cationically modified or hydrophobically modified. Such modified cellulosic polymers can provide anti-abrasion benefits and dye lock benefits to fabric during the laundering cycle. Suitable cellulosic polymers include cationically modified hydroxyethyl cellulose.

Other suitable care polymers include dye lock polymers, for example the condensation oligomer produced by the condensation of imidazole and epichlorhydrin, preferably in ratio of 1:4:1. A suitable commercially available dye lock polymer is Polyquart^{®} FDI (Cognis).

Other suitable care polymers include amino-silicone, which can provide fabric feel benefits and fabric shape retention benefits.

Bleach: Suitable bleach includes sources of hydrogen peroxide, bleach activators, bleach catalysts, pre-formed peracids and any combination thereof. A particularly suitable bleach includes a combination of a source of hydrogen peroxide with a bleach activator and/or a bleach catalyst.

Source of hydrogen peroxide: Suitable sources of hydrogen peroxide include sodium perborate and/or sodium percarbonate.

Bleach activator: Suitable bleach activators include tetra acetyl ethylene diamine and/or alkyl oxybenzene sulphonate.

Bleach catalyst: The composition may comprise a bleach catalyst. Suitable bleach catalysts include oxaziridinium bleach catalysts, transistion metal bleach catalysts, especially manganese and iron bleach catalysts. A suitable bleach catalyst has a structure corresponding to general formula below: 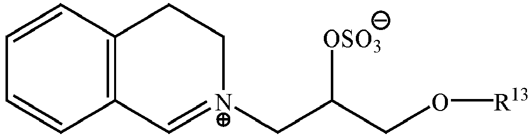 wherein R¹³ is selected from the group consisting of 2-ethylhexyl, 2-propylheptyl, 2-butyloctyl, 2-pentylnonyl, 2-hexyldecyl, n-dodecyl, n-tetradecyl, n-hexadecyl, n-octadecyl, isononyl, iso-decyl, iso-tridecyl and iso-pentadecyl.

Pre-formed peracid: Suitable pre-form peracids include phthalimido-peroxycaproic acid.

Enzymes: Suitable enzymes include lipases, proteases, cellulases, amylases and any combination thereof.

Protease: Suitable proteases include metalloproteases and/or serine proteases. Examples of suitable neutral or alkaline proteases include: subtilisins (EC 3.4.21.62); trypsin-type or chymotrypsin-type proteases; and metalloproteases. The suitable proteases include chemically or genetically modified mutants of the aforementioned suitable proteases.

Suitable commercially available protease enzymes include those sold under the trade names Alcalase^{®}, Savinase^{®}, Primase^{®}, Durazym^{®}, Polarzyme^{®}, Kannase^{®}, Liquanase^{®}, Liquanase Ultra^{®}, Savinase Ultra^{®}, Ovozyme^{®}, Neutrase^{®}, Everlase^{®} and Esperase^{®} by Novozymes A/S (Denmark), those sold under the tradename Maxatase^{®}, Maxacal^{®}, Maxapem^{®}, Preferenz P^{®} series of proteases including Preferenz^{®} P280, Preferenz^{®} P281, Preferenz^{®} P2018-C, Preferenz^{®} P2081-WE, Preferenz^{®} P2082-EE and Preferenz^{®} P2083-A/J, Properase^{®}, Purafect^{®}, Purafect Prime^{®}, Purafect Ox^{®}, FN3^{®} , FN4^{®}, Excellase^{®} and Purafect OXP^{®} by DuPont, those sold under the tradename Opticlean^{®} and Optimase^{®} by Solvay Enzymes, those available from Henkel/ Kemira, namely BLAP (sequence shown in Figure 29 of US 5,352,604 with the folowing mutations S99D + S101 R + S103A + V104I + G159S, hereinafter referred to as BLAP), BLAP R (BLAP with S3T + V4I + V199M + V205I + L217D), BLAP X (BLAP with S3T + V4I + V205I) and BLAP F49 (BLAP with S3T + V4I + A194P + V199M + V205I + L217D) - all from Henkel/Kemira; and KAP (Bacillus alkalophilus subtilisin with mutations A230V + S256G + S259N) from Kao.

A suitable protease is described in WO11/140316 and WO11/072117.

Amylase: Suitable amylases are derived from AA560 alpha amylase endogenous to Bacillus sp. DSM 12649, preferably having the following mutations: R118K, D183*, G184*, N195F, R320K, and/or R458K. Suitable commercially available amylases include Stainzyme^{®}, Stainzyme^{®} Plus, Natalase, Termamyl^{®}, Termamyl^{®} Ultra, Liquezyme^{®} SZ, Duramyl^{®}, Everest^{®} (all Novozymes) and Spezyme^{®} AA, Preferenz S^{®} series of amylases, Purastar^{®} and Purastar^{®} Ox Am, Optisize^{®} HT Plus (all Du Pont).
A suitable amylase is described in WO06/002643.

Cellulase: Suitable cellulases include those of bacterial or fungal origin. Chemically modified or protein engineered mutants are also suitable. Suitable cellulases include cellulases from the genera *Bacillus, Pseudomonas, Humicola, Fusarium, Thielavia, Acremonium,* e.g., the fungal cellulases produced from *Humicola insolens, Myceliophthora thermophila* and *Fusarium oxysporum.*

Commercially available cellulases include Celluzyme^{®}, Carezyme^{®}, and Carezyme^{®} Premium, Celluclean^{®} and Whitezyme^{®} (Novozymes A/S), Revitalenz^{®} series of enzymes (Du Pont), and Biotouch^{®} series of enzymes (AB Enzymes). Suitable commercially available cellulases include Carezyme^{®} Premium, Celluclean^{®} Classic. Suitable cellulases are described in WO07/144857 and WO10/056652.

Lipase: Suitable lipases include those of bacterial, fungal or synthetic origin, and variants thereof. Chemically modified or protein engineered mutants are also suitable. Examples of suitable lipases include lipases from *Humicola* (synonym *Thermomyces),* e.g., from *H. lanuginosa (T. lanuginosus*).

The lipase may be a "first cycle lipase", e.g. such as those described in WO06/090335 and WO13/116261. In one aspect, the lipase is a first-wash lipase, preferably a variant of the wild-type lipase from Thermomyces lanuginosus comprising T231R and/or N233R mutations. Preferred lipases include those sold under the tradenames Lipex^{®}, Lipolex^{®} and Lipoclean^{®} by Novozymes, Bagsvaerd, Denmark.

Other suitable lipases include: Liprl 139, e.g. as described in WO2013/171241; and TfuLip2, e.g. as described in WO2011/084412 and WO2013/033318.

Other enzymes: Other suitable enzymes are bleaching enzymes, such as peroxidases/oxidases, which include those of plant, bacterial or fungal origin and variants thereof. Commercially available peroxidases include Guardzyme^{®} (Novozymes A/S). Other suitable enzymes include choline oxidases and perhydrolases such as those used in Gentle Power Bleach^{™}.

Other suitable enzymes include pectate lyases sold under the tradenames X-Pect^{®}, Pectaway^{®} (from Novozymes A/S, Bagsvaerd, Denmark) and PrimaGreen^{®} (DuPont) and mannanases sold under the tradenames Mannaway^{®} (Novozymes A/S, Bagsvaerd, Denmark), and Mannastar^{®} (Du Pont).

Zeolite builder: The composition may comprise zeolite builder. The composition may comprise from 0wt% to 5wt% zeolite builder, or 3wt% zeolite builder. The composition may even be substantially free of zeolite builder; substantially free means "no deliberately added". Typical zeolite builders include zeolite A, zeolite P and zeolite MAP.

Phosphate builder: The composition may comprise phosphate builder. The composition may comprise from 0wt% to 5wt% phosphate builder, or to 3wt%, phosphate builder. The composition may even be substantially free of phosphate builder; substantially free means "no deliberately added". A typical phosphate builder is sodium tri-polyphosphate.

Carbonate salt: The composition may comprise carbonate salt. The composition may comprise from 0wt% to 10wt% carbonate salt, or to 5wt% carbonate salt. The composition may even be substantially free of carbonate salt; substantially free means "no deliberately added". Suitable carbonate salts include sodium carbonate and sodium bicarbonate.

Silicate salt: The composition may comprise silicate salt. The composition may comprise from 0wt% to 10wt% silicate salt, or to 5wt% silicate salt. A preferred silicate salt is sodium silicate, especially preferred are sodium silicates having a Na₂O:SiO₂ ratio of from 1.0 to 2.8, preferably from 1.6 to 2.0.

Sulphate salt: A suitable sulphate salt is sodium sulphate.

Brightener: Suitable fluorescent brighteners include: di-styryl biphenyl compounds, e.g. Tinopal^{®} CBS-X, di-amino stilbene di-sulfonic acid compounds, e.g. Tinopal^{®} DMS pure Xtra and Blankophor^{®} HRH, and Pyrazoline compounds, e.g. Blankophor^{®} SN, and coumarin compounds, e.g. Tinopal^{®} SWN.

Preferred brighteners are: sodium 2 (4-styryl-3-sulfophenyl)-2H-napthol[1,2-d]triazole, disodium 4,4'-bis{[(4-anilino-6-(N methyl-N-2 hydroxyethyl)amino 1 ,3,5- triazin-2-yl)];amino}stilbene-2-2' disulfonate, disodium 4,4'-bis{[(4-anilino-6-morpholino-1,3,5-triazin-2-yl)]amino} stilbene-2-2' disulfonate, and disodium 4,4'- bis(2-sulfostyryl)biphenyl. A suitable fluorescent brightener is C.I. Fluorescent Brightener 260, which may be used in its beta or alpha crystalline forms, or a mixture of these forms.

Chelant: The composition may also comprise a chelant selected from: diethylene triamine pentaacetate, diethylene triamine penta(methyl phosphonic acid), ethylene diamine-N'N'-disuccinic acid, ethylene diamine tetraacetate, ethylene diamine tetra(methylene phosphonic acid) and hydroxyethane di(methylene phosphonic acid). A preferred chelant is ethylene diamine-N'N'-disuccinic acid (EDDS) and/or hydroxyethane diphosphonic acid (HEDP). The composition preferably comprises ethylene diamine-N'N'- disuccinic acid or salt thereof. Preferably the ethylene diamine-N'N'-disuccinic acid is in S,S enantiomeric form. Preferably the composition comprises 4,5-dihydroxy-m-benzenedisulfonic acid disodium salt. Preferred chelants may also function as calcium carbonate crystal growth inhibitors such as: 1-hydroxyethanediphosphonic acid (HEDP) and salt thereof; N,N-dicarboxymethyl-2-aminopentane-1,5-dioic acid and salt thereof; 2-phosphonobutane-1,2,4-tricarboxylic acid and salt thereof; and combination thereof.

Hueing agent: Suitable hueing agents include small molecule dyes, typically falling into the Colour Index (C.I.) classifications of Acid, Direct, Basic, Reactive (including hydrolysed forms thereof) or Solvent or Disperse dyes, for example classified as Blue, Violet, Red, Green or Black, and provide the desired shade either alone or in combination. Preferred such hueing agents include Acid Violet 50, Direct Violet 9, 66 and 99, Solvent Violet 13 and any combination thereof.

Many hueing agents are known and described in the art which may be suitable for the present invention, such as hueing agents described in WO2014/089386.

Suitable hueing agents include phthalocyanine and azo dye conjugates, such as described in WO2009/069077.

Suitable hueing agents may be alkoxylated. Such alkoxylated compounds may be produced by organic synthesis that may produce a mixture of molecules having different degrees of alkoxylation. Such mixtures may be used directly to provide the hueing agent, or may undergo a purification step to increase the proportion of the target molecule. Suitable hueing agents include alkoxylated bis-azo dyes, such as described in WO2012/054835, and/or alkoxylated thiophene azo dyes, such as described in WO2008/087497 and WO2012/166768.

The hueing agent may be incorporated into the detergent composition as part of a reaction mixture which is the result of the organic synthesis for a dye molecule, with optional purification step(s). Such reaction mixtures generally comprise the dye molecule itself and in addition may comprise un-reacted starting materials and/or by-products of the organic synthesis route. Suitable hueing agents can be incorporated into hueing dye particles, such as described in WO 2009/069077.

Dye transfer inhibitors: Suitable dye transfer inhibitors include polyamine N-oxide polymers, copolymers of N-vinylpyrrolidone and N-vinylimidazole, polyvinylpyrrolidone, polyvinyloxazolidone, polyvinylimidazole and mixtures thereof. Preferred are poly(vinyl pyrrolidone), poly(vinylpyridine betaine), poly(vinylpyridine N-oxide), poly(vinyl pyrrolidone-vinyl imidazole) and mixtures thereof. Suitable commercially available dye transfer inhibitors include PVP-K15 and K30 (Ashland), Sokalan^{®} HP165, HP50, HP53, HP59, HP56K, HP56, HP66 (BASF), Chromabond^{®} S-400, S403E and S-100 (Ashland).

Perfume: Suitable perfumes comprise perfume materials selected from the group: (a) perfume materials having a ClogP of less than 3.0 and a boiling point of less than 250°C (quadrant 1 perfume materials); (b) perfume materials having a ClogP of less than 3.0 and a boiling point of 250°C or greater (quadrant 2 perfume materials); (c) perfume materials having a ClogP of 3.0 or greater and a boiling point of less than 250°C (quadrant 3 perfume materials); (d) perfume materials having a ClogP of 3.0 or greater and a boiling point of 250°C or greater (quadrant 4 perfume materials); and (e) mixtures thereof.

It may be preferred for the perfume to be in the form of a perfume delivery technology. Such delivery technologies further stabilize and enhance the deposition and release of perfume materials from the laundered fabric. Such perfume delivery technologies can also be used to further increase the longevity of perfume release from the laundered fabric. Suitable perfume delivery technologies include: perfume microcapsules, pro-perfumes, polymer assisted deliveries, molecule assisted deliveries, fiber assisted deliveries, amine assisted deliveries, cyclodextrin, starch encapsulated accord, zeolite and other inorganic carriers, and any mixture thereof. A suitable perfume microcapsule is described in WO2009/101593.

Silicone: Suitable silicones include polydimethylsiloxane and amino-silicones. Suitable silicones are described in WO05075616.

### EXAMPLES

The experimental set up consists of a Rotating packed bed (RPB), source of synthetic conditioned flue gas, a feeder for detergent particulate fines and a liquid tank with mixing capability and a pump to store and feed the sodium hydroxide solution.

RPB packing has the following bed dimensions: inner diameter = 85mm, outer diameter = 280mm, and bed thickness of 20mm. It has a specific surface area of ap = 830m2/m3 and a porosity of ε = 0.95.

Synthetic flue gas is produced using a blend of compressed air and CO2. The CO2 is supplied from a vapour withdrawal cylinder (BOC 40-VK) and the gases are blended using gas mass flow controllers (Bronkhorst D-6383; D-6371). An electric immersion element preheats the deionised water inside the bubble column humidifier to 50°C. The air is bubbled through the column and exits as fully saturated air with 100% relative humidity. Fine detergent particles containing surfactant and inorganics is added using a vibratory feeder (Fritsch L24) and a venturi. The CO2 concentration was monitored at the gas inlet and outlet. CO2 gas concentrations were measured using infrared gas analysers (Gem Scientific Geotech G100, additionally GSS SprintIR R sensors). Point measurements of humidity were also taken at the gas outlet during the experiment, using a handheld hygrometer (Testo 605i). Pressure drop was monitored across the RPB using a manometer (DPI in diagram). Temperature was monitored for the inlet and outlet of both the gas and liquid using PT100 temperature probes, connected to a datalogger (picologger). Liquid 50wt% NaOH solution was prepared from dry powder (Inovyn sodium hydroxide micropearls, 25kg) using deionised water, inside the feed tank. Masses were recorded on a weigh scale during the addition. The liquid was pre-heated using an immersed coil connected to an external recirculated hot water system (Jubalo SE-26). The liquid was delivered using a gear pump (Liquidflo 45S68EER120) and measured using a Coriolis flowmeter (Rheonik RHM 06).

| | | |
|---|---|---|
| | | |
| Process conditions and equipment set up | RPB RPM | 600 |
| | Centrifugal acceleration, m²/s | 380 |
| | Type of Packing | Montz Packing |
| | Dry Air, kg/hr | 69.8 |
| | Water Vapour, kg/hr | 6.0 |
| | Temperature of Humid Air, deg C | 50 |
| | CO2, kg/hr | 0.98 |
| Inlet Streams | Detergent fines addition rate, kg/hr | 0.2 |
| | Sodium hydroxide concentration, % | 50 |
| | Sodium hydroxide rate, kg/hr | 24.5 |
| | Temperature of NaOH solution | 60 deg C |
| | Liquid to Gas Ratio | 0.32 |
| Slurry Stream | Sodium carbonate, kg/hr | 0.9 kg/hr anyhydrous |
| | Excess caustic with water, kg/hr | 24.7 kg/hr |
| Gas Stream | %CO2 recovery | 39% |

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".

## Claims

1. A method of making a laundry detergent recycle stream composition, wherein the method comprises the steps of:
(a) introducing into a rotating packed bed:
(i) an exhaust stream from a laundry detergent powder spray-drying tower, wherein the exhaust stream comprises:
(i)(a) from 400ppm to 40000ppm CO₂; and
(i)(b) from 20ppm to 3000ppm surfactant particulate fine material comprising from 10wt% to 50wt% detersive surfactant and having a particle size distribution such that the d₅₀ particle size is in the range of from 5µm to 30µm and the d₉₀ particle size is in the range of from 10µm to 80µm; and
(ii) an aqueous NaOH mixture comprising from at least 30wt% NaOH,
wherein the ratio of (i) the inlet flow of said aqueous NaOH mixture into said rotating packed bed to (ii) the inlet flow of said exhaust stream into said rotating packed bed is in the range of from 0.2 to 2,
wherein the temperature of said aqueous NaOH mixture is greater than the dew point of said exhaust stream,
and wherein:
(i) at least some of the CO₂ from said exhaust stream is reacted with some of the NaOH from said aqueous NaOH mixture to capture the carbon from the CO₂ to form Na₂CO₃ in solid particulate form and H₂O in fluid form; and
(ii) at least some of said surfactant particulate fine material is removed from the exhaust stream,
to form an intermediate captured composition that is removed from the rotating packed bed, wherein the intermediate captured composition is in the form of a slurry and comprises:
(i) from 1wt% to 20wt% said solid particulate Na₂CO₃;
(ii) from 0.05wt% to 1.0wt% said surfactant particulate fine material;
(iii) from 20wt% to 49.95wt% NaOH in fluid form; and
(iv) from 29wt% to 78.5wt% H₂O in fluid form; and
(b) passing the intermediate captured composition through a filter to remove at least some of the NaOH and at least some of the H₂O from the intermediate captured composition to form a laundry detergent recycle stream composition, wherein the laundry detergent recycle stream composition comprises:
(i) from 25wt% to 55wt% said solid particulate Na₂CO₃;
(ii) from 0.5wt% to 10wt% said surfactant particulate fine material;
(iii) from 5wt% to 34wt% NaOH in fluid form; and
(iv) from 1wt% to 68.5wt% water.

2. A process according to claim 1, wherein the exhaust stream comprises:
(i)(a) from 400ppm to 4000ppm CO₂; and
(i)(b) from 20ppm to 200ppm surfactant particulate fine material,
wherein said exhaust stream has a humidity of from 60 gH₂0/kgair to 600 gH₂0/kgair,
wherein said exhaust stream has a temperature in the range of from 70°C to 100°C,
and wherein said exhaust stream is under an absolute pressure of at least 102,750 Pa when it is introduced into the rotating packed bed.

3. A process according to any preceding claim, wherein said exhaust stream has a dew point in the range of from 50°C to 65°C.

4. A process according to any preceding claim, wherein said surfactant particulate fine material comprises from 20wt% to 30wt% detersive surfactant and has a particle size distribution such that the d₅₀ particle size is in the range of from 10µm to 20µm and the d₉₀ particle size is in the range of from 15µm to 35µm.

5. A process according to any preceding claim, wherein said aqueous NaOH mixture comprises at least 40wt% NaOH and has a temperature of from 60°C to 80°C.

6. A process according to any preceding claim, wherein the ratio of (i) the inlet flow of said aqueous NaOH mixture into said rotating packed bed to (ii) the inlet flow of said exhaust stream into said rotating packed bed is in the range of from 0.8 to 1.8.

7. A process according to any preceding claim, wherein the rotating packed bed rotates with a centrifugal acceleration of 70 to 1650 m/s².

8. A process according to any preceding claim, wherein the packing in the rotating packed bed has an available surface area to volume ratio of from 600 to 1500 m²/m³.

9. A process according to any preceding claim, wherein the intermediate captured composition comprises:
(i) from 2wt% to 10wt% said solid particulate Na₂CO₃;
(ii) from 0.1wt% to 0.9wt% said surfactant particulate fine material;
(iii) from 30wt% to 45wt% NaOH in fluid form; and
(iv) from 44wt% to 67.9wt% H₂O in fluid form.

10. A process according to any preceding claim, wherein the laundry detergent recycle stream composition comprises:
(i) from 30wt% to 50wt% said solid particulate Na₂CO₃;
(ii) from 2wt% to 8wt% said surfactant particulate fine material;
(iii) from 10wt% to 30wt% NaOH in fluid form; and
(iv) from 12wt% to 58wt% water.

11. A process according to any preceding claim, wherein at least some of the NaOH removed from the intermediate captured composition during step (b) is recycled back into the aqueous NaOH mixture that is introduced into the rotating packed bed during step (a).

12. A process according to any preceding claim, wherein the Na₂CO₃ formed in the carbon capture transformation of step (a) is in anhydrous form.

13. A process according to any preceding claim wherein the exhaust stream comprises from 400ppm to 2000 ppm CO₂.
